# EUROPEAN PATENT APPLICATION

(11) **EP 4 571 279 A2**
(43) Date of publication of application: **18.06.2025**
(21) Application number: 24219998.2
(22) Date of filing: 13.12.2024
(51) Int. Cl.: G01K 11/3206, G01D 5/26, G01L 9/00

(54) **COLLIMATING ETALONS FOR PRESSURE AND TEMPERATURE SENSING**

(30) Priority: 15.12.2023 US 202318541321
(71) Applicant: Simmonds Precision Products, Inc., Vergennes, VT 05491 (US)
(72) Inventor: GIRARD, Joshua, South Burlington, 05403 (US); BROSNAN, Kristen H., Colchester, 05446 (US); FITZHUGH, Christopher, Essex Junction, 05452 (US); CROWNE, David H., Weybridge, 05753 (US)
(74) Representative: Dehns

(57) **Abstract**

A Fabry-Pérot sensor assembly includes an optical element defining a Fabry-Pérot optical cavity therein. A sensor ferrule is affixed to the optical element. The sensor ferrule is configured to physically connect to an optical fiber, optically aligning and spacing the optical fiber with the optical cavity. The sensor ferrule defines a bore for receiving the optical fiber. The bore extends along a longitudinal axis that extends to the optical element. The optical cavity is a second optical member defined between a first optical member and a third optical member spaced apart from the first optical member along the longitudinal axis. The first optical member includes a curved lens surface facing away from the optical cavity and into the bore, configured to collimate light passing through the first optical member.

## Description

### BACKGROUND

### 1. Field

The present disclosure relates to sensors for pressure and temperature, and more particularly to Fabry-Pérot cavity optical sensors for pressure and temperature.

### 2. Description of Related Art

Fabry-Pérot cavity sensors can measure pressure, temperature, or both. The sensor includes a diaphragm that responds to a change in temperature or pressure, a base connected to the diaphragm, an optical cavity, and an optical fiber that may conduct light reflected off of a surface of the diaphragm. An interrogator may be provided for detecting a deflection of the diaphragm. Changes in size of the cavity change the interference of reflected light in the interrogator, which can be calibrated to infer temperature or pressure or both.

The conventional techniques have been considered satisfactory for their intended purpose. However, there is an ever present need for improved systems and methods for Fabry-Pérot cavity optical sensors. This disclosure provides a solution for this need.

### SUMMARY

A Fabry-Pérot sensor assembly includes an optical element defining a Fabry-Pérot optical cavity therein. A sensor ferrule is affixed to the optical element. The sensor ferrule is configured to physically connect to an optical fiber, optically aligning and spacing the optical fiber with the optical cavity. The sensor ferrule defines a bore for receiving the optical fiber. The bore extends along a longitudinal axis that extends to the optical element. The optical cavity is a second optical member defined between a first optical member and a third optical member spaced apart from the first optical member along the longitudinal axis. The first optical member includes a curved lens surface facing away from the optical cavity and into the bore, configured to collimate light passing through the first optical member.

The third optical member can be a diaphragm configured to deflect more than the first optical member under external pressure changes. The curved lens surface can span across the optical cavity laterally relative to the longitudinal axis. The curved lens surface can span across a full diameter of the first optical member. The first optical member can include a flat surface connected to the ferrule, wherein the flat surface surrounds the curved lens surface.

The first optical member can include a radiused surface bounding the optical cavity and spanning across the optical cavity laterally relative to the longitudinal axis. The third optical member includes a contoured inner and/or outer surface spanning the third optical member laterally relative to the longitudinal axis.

The optical fiber can be affixed within the sensor ferrule optically aligned with the optical cavity along the axis. An interrogator can be optically connected to the optical fiber, wherein the interrogator is configured to illuminate the cavity through the optical fiber, to receive reflected spectrum from the cavity, and to measure temperature and/or pressure of the cavity based on the reflected spectrum. The optical element can include MgAl₂O₄ spinel or aluminum oxynitride Al₂₃N₂₇O₅ (ALON). An optical path can pass from the bore, through the first optical member, through the optical cavity, reflecting off of the third optical member and passing back through the optical cavity and through the first optical member into the bore and back into the fiber.

The third optical member is an endplate with an at least partially mirrored surface for increasing signal reflections in the optical cavity and back into the optical fiber. The first optical member can be a main sensor body, wherein the ferrule is affixed to the main sensor body. At least one of the first and third optical members can be of MgAl₂O₄ spinel. At least one of the first and third optical members can be aluminum oxynitride Al₂₃N₂₇O₅ (ALON). An anti-reflective coating can be included on at least one surface of the optical element.

A method of making a Fabry-Pérot optical cavity includes using a machining and/or grinding process to remove material from a first optical member to form a curved lens surface facing away from an optical cavity surface of a first optical member. The method includes affixing a third optical member to the first optical member to enclose the optical cavity with the curved lens surface outside an optical cavity formed as a second optical member between the first and third optical members.

The first optical member may include MgAl₂O₄ spinel.

The first optical member may include aluminum oxynitride Al₂₃N₂₇O₅ (ALON).

The second optical member may be of MgAl₂O₄ spinel.

The second optical member may be of aluminum oxynitride Al₂₃N₂₇O₅ (ALON).

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective view of an embodiment of a sensor assembly constructed in accordance with the present disclosure, showing the optical fiber, the interrogator, and the Fabry-Pérot optical element with sensor ferrule;
Fig. 2 is a schematic cross-sectional elevation view of the optical element and ferrule of Fig. 1, showing a fiber-side surface of the first optical member being radiused;
Fig. 3 is a schematic axial end view of the optical element and sensor ferrule of Fig. 2;
Fig. 4 is a schematic cross-sectional elevation view of an embodiment of the optical element and sensor ferrule of Fig. 2, showing the optical cavity with a radiused surface formed in only a central portion of the first optical member;
Fig. 5 is a schematic cross-sectional elevation view of an embodiment of the optical element and sensor ferrule of Fig. 2, showing the optical cavity formed with radiused surfaces in both the first and third optical members; and
Fig. 6 is a schematic cross-sectional elevation view of a portion of the system of Fig. 1, showing the collimating effect of the curved surface of the first optical member.

### DETAILED DESCRIPTION OF THE PREFERRED EMBODIMENTS

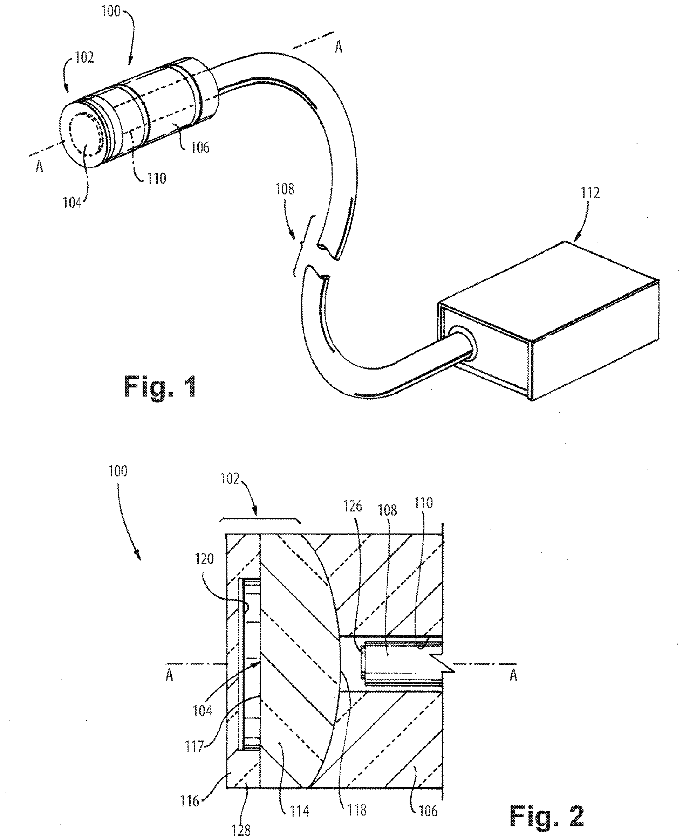

Reference will now be made to the drawings wherein like reference numerals identify similar structural features or aspects of the subject disclosure. For purposes of explanation and illustration, and not limitation, a partial view of an embodiment of a sensor assembly in accordance with the disclosure is shown in Fig. 1 and is designated generally by reference character 100. Other embodiments of systems in accordance with the disclosure, or aspects thereof, are provided in Figs. 2-6, as will be described. The systems and methods described herein can be used to provide collimation lensing in the etalon of Fabry-Pérot sensors for optically based temperature and pressure measurements.

The Fabry-Pérot sensor, i.e. etalon, assembly 100 includes an optical element 102 defining a Fabry-Pérot optical cavity 104 therein. A sensor ferrule 106 is affixed to the optical element 102. The sensor ferrule 106 is physically connected to an optical fiber 108 which may have its own fiber ferrule, thereby aligning the optical fiber 108 optically with the cavity 104 thereby ensuring optical alignment with the optical element 102. The optical element 102 can include MgAl₂O₄ spinel or aluminum oxynitride Al₂₃N₂₇O₅ (ALON), and the sensor ferrule 106 optionally includes MgAl₂O₄ spinel or aluminum oxynitride Al₂₃N₂₇O₅ (ALON). The optical fiber 108 is affixed within a bore 110 the ferrule 106 optically aligned with the cavity 104. Additionally, bore 110 may also accommodate a fiber ferrule on the sensor end of the optical fiber 108 in order to facilitate optical alignment and spacing of the core of the optical fiber 108 with the optical element 102. An interrogator 112 is optically connected to the optical fiber 108, i.e. to an end of the optical fiber 108 opposite then end of the optical fiber 108 that is connected to the sensor ferrule 106. The interrogator 112 is thus configured to illuminate the optical cavity 104 through the optical fiber 108, to receive reflected spectrum from the cavity 104, and to measure temperature and/or pressure exhibited on the optical element 102 based on the reflected spectrum.

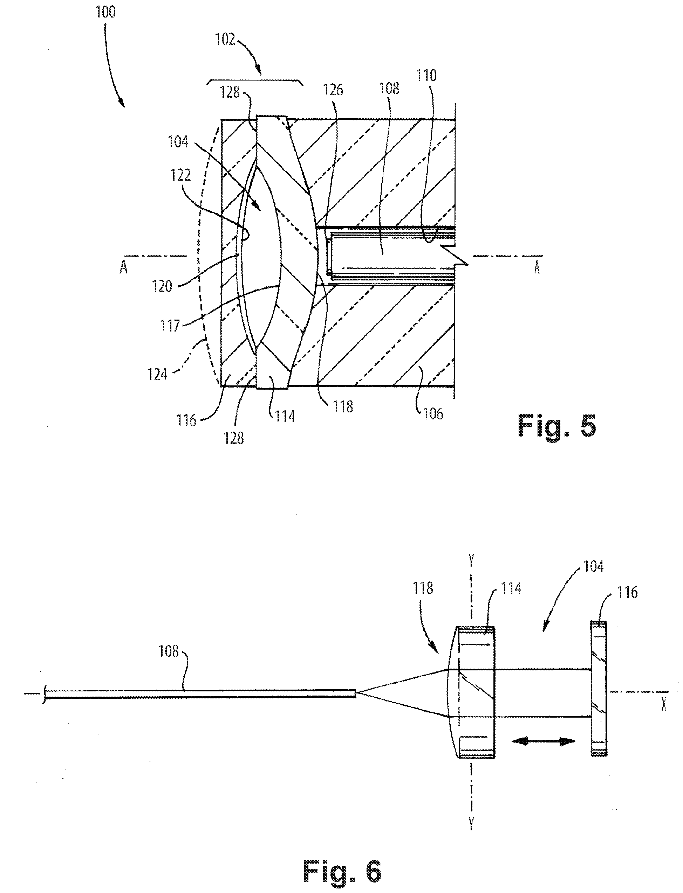

With reference now to Fig. 2, the bore 110 extends along the longitudinal axis A that extends to the optical element 102. The optical cavity 104 is a second optical member defined between a first optical member 114 and a third optical member 116 spaced apart from the first optical member 114 along the longitudinal axis A. The first optical member 114 includes a curved lens surface 118 facing away from the optical cavity 104 and into the bore 110. As shown schematically in Fig. 6, this curved lens surface 118 is configured to collimate light passing through the first optical member 114 to and from the optical fiber 108, helping ensure all of the light is available for use in measuring deflections of the third optical member 116 relative to the first optical member 114.

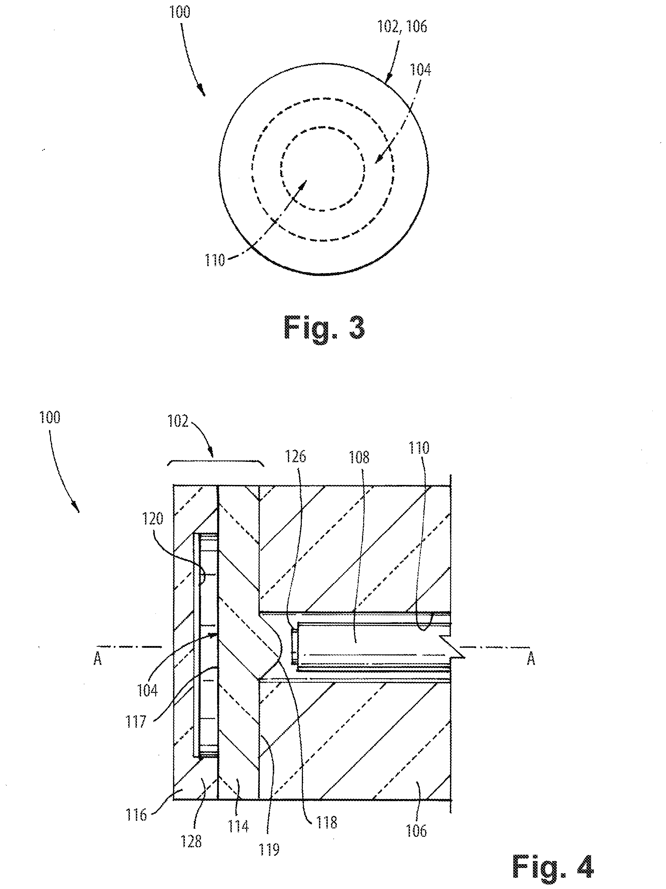

The first optical member 114 the curved lens surface 118 spans across the optical cavity 104 and spanning across the optical cavity 104 laterally relative to the longitudinal axis A (spanning laterally up and down as oriented in Fig. 2). The curved lens surface 118 can span across a full diameter of the first optical member as shown in Fig. 2, or it is also contemplated that the first optical member 114 can include a flat surface 119 connected to the ferrule 106, wherein the flat surface 119 surrounds the curved lens surface 118 as shown in Fig. 4. The surface 120 of the third optical member 116 that faces inward into the optical cavity 104 is flat, i.e. not radiused, and can be coated with a reflective coating 122. The first optical member 114 is a main sensor body, wherein the ferrule 106 is affixed to the main sensor body. An anti-reflective coating 126 is included on at least one surface of the optical element, e.g. on the end of the optical fiber 108. Fig. 3 shows the cavity 104, bore 110, and the combination of the sensor ferrule 106 and optical element 102 as viewed into the longitudinal axis of Fig. 2.

With continued reference to Fig. 2, the third optical member 116 can be a diaphragm configured to deflect more than the first optical member 114 under external pressure changes. The third optical member 116 is an endplate with an at least partially mirrored surface 120 for increasing signal reflections in the optical cavity 104 and back into the optical fiber 108. The surface 117 of the first optical element that bounds the optical cavity 104 is flat. An optical path passes from the bore 110, through the first optical member 114, through the optical cavity 104, reflects off of the third optical member 116 and passes back through the optical cavity 104 and through the first optical member 114 into the bore 110 and back into the fiber 108. As shown in Fig. 6, the portion of the optical pass inside the optical cavity 104 is collimated.

Fig. 5 shows another configuration of the optical element 102, wherein both of the surfaces 117, 120 of the first and second optical members 114, 116 that bound the optical cavity 104 can be radiused surfaces bounding the optical cavity 104 and spanning across the optical cavity 104 laterally relative to the longitudinal axis A. Like with Fig. 4, the configuration of Fig. 5 can have the reflective coating 122 on the surface 120. It is also contemplated that the third optical member 116 can include a contoured outer surface 124 spanning the third optical member 116 laterally relative to the longitudinal axis A, indicated in Fig. 5 with a broken line, and this can be substantially parallel with the radiused inward surface 120. At least one of the first and third optical members 114, 116 can be of MgAl₂O₄ spinel or aluminum oxynitride Al₂₃N₂₇O₅ (ALON). The one or more radiused surfaces 117, 118, 120, 124 can be machined or ground into the respective substrates of the optical members 114, 116.

With continued reference to Fig. 2, a method of making a Fabry-Pérot optical cavity, e.g. cavity 104, includes using a machining and/or grinding process to remove material from a first optical member 114 to form a curved lens surface facing away from an optical cavity surface 117 of the first optical member 114. The method includes affixing a third optical member 116 to the first optical member 114 to enclose the optical cavity 104 with the curved lens surface 118 outside the optical cavity 104 that is formed as a second optical member between the first and third optical members.

The curved lens surface 118 is a hyperbolic (or approximate hyperbolic) shape incorporated as the first interface of the Fabry Perot etalon stack. This collimates light coming from the optical fiber 108 into the sensor, as well as directing it back into the fiber 108 when the light is leaving the sensor. Other potential materials to construct the lens shaped component and all reflectors include Nd doped YAG (nominally Y2.97Nd0.03Al5O12), a LaGd doped hafnium or zirconium oxide ceramic (La0.8Gd1.2Hf2O7 or LaGdZr2O7) as well as polycrystalline Al₂O₃, or single crystal Al₂O₃ or sapphire and combinations of single and polycrystalline species of the aforementioned materials (ALON, Spinel, Al₂O₃).

The systems and methods as disclosed herein provide potential benefits including the following. Nearly all optical power can be sent into the sensor versus the traditional approach with no lensing effect. The lens is shaped into the sensor body itself. With this approach light should only pass through the sensor reflectors and bodies in a collimated manner, increasing response SNR (signal to noise ratio) and conserving optical power. The lens surface can be tuned to the fiber's numerical aperture to collimate the light heading into the sensor and in reverse to redirect the collimated light into the fiber on its way back out of the sensor. The hyperbola can be approximated using spherical geometry to simplify manufacturing, as long as aberration is accounted for.

Systems and methods as disclosed herein can provide collimation lensing in the etalon of Fabry-Pérot sensors for optically based temperature and pressure measurements. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A Fabry-Pérot sensor assembly comprising:
an optical element defining a Fabry-Pérot optical cavity therein; and
a sensor ferrule affixed to the optical element, wherein the sensor ferrule is configured to physically connect to an optical fiber, optically aligning and spacing the optical fiber with the optical cavity,
wherein the sensor ferrule defines a bore for receiving the optical fiber,
wherein the bore extends along a longitudinal axis that extends to the optical element, and
wherein the optical cavity is a second optical member defined between a first optical member and a third optical member spaced apart from the first optical member along the longitudinal axis, and wherein the first optical member includes a curved lens surface facing away from the optical cavity and into the bore, configured to collimate light passing through the first optical member.

2. The assembly as recited in claim 1, wherein the curved lens surface spans across the optical cavity laterally relative to the longitudinal axis, and/or wherein the curved lens surface spans across a full diameter of the first optical member.

3. The assembly as recited in claim 1 or 2, wherein the first optical member includes a flat surface connected to the ferrule, wherein the flat surface surrounds the curved lens surface.

4. The assembly as recited in claim 1, 2 or 3, wherein the first optical member also includes a radiused surface bounding the optical cavity and spanning across the optical cavity laterally relative to the longitudinal axis.

5. The assembly as recited in any preceding claim, wherein the third optical member includes a contoured inner surface spanning the third optical member laterally relative to the longitudinal axis.

6. The assembly as recited in any preceding claim, further comprising the optical fiber affixed within the sensor ferrule optically aligned with the optical cavity along the axis.

7. The assembly as recited in claim 6, further comprising an interrogator optically connected to the optical fiber, wherein the interrogator is configured to illuminate the cavity through the optical fiber, to receive reflected spectrum from the cavity, and to measure temperature and/or pressure of the cavity based on the reflected spectrum.

8. The assembly as recited in claim 6 or 7, wherein an optical path passes from the bore, through the first optical member, through the optical cavity, reflects off of the third optical member and passes back through the optical cavity and through the first optical member into the bore and back into the fiber.

9. The assembly as recited in claim 6, 7 or 8, wherein the third optical member is an endplate with an at least partially mirrored surface for increasing signal reflections in the optical cavity and back into the optical fiber.

10. The assembly as recited in any preceding claim, wherein the first optical member is a main sensor body, wherein the ferrule is affixed to the main sensor body.

11. The assembly as recited in any preceding claim, wherein the optical element includes MgAl₂O₄ spinel or aluminum oxynitride Al₂₃N₂₇O₅ (ALON).

12. The assembly as recited in any preceding claim, wherein at least one of the first and third optical members is MgAl₂O₄ spinel.

13. The assembly as recited in any preceding claim, wherein at least one of the first and third optical members is aluminum oxynitride Al₂₃N₂₇O₅ (ALON).

14. The assembly as recited in any preceding claim, further comprising anti-reflective coating on at least one surface of the optical element.

15. A method of making a Fabry-Pérot optical cavity comprising:
using a machining and/or grinding process to remove material from a first optical member to form a curved lens surface facing away from an optical cavity surface of a first optical member; and
affixing a third optical member to the first optical member to enclose the optical cavity with the curved lens surface outside an optical cavity formed as a second optical member between the first and third optical members.
